Europäisches Patentamt

European Patent Office

Office européen des brevets

(11) Veröffentlichungsnummer: **0 296 367 B1**

# (12) EUROPÄISCHE PATENTSCHRIFT

(45) Veröffentlichungstag der Patentschrift: **16.10.91**

(51) Int. Cl.⁵: **B23Q 3/155**

(21) Anmeldenummer: **88108249.9**

(22) Anmeldetag: **24.05.88**

(54) Automatische Werkzeugwechseleinrichtung.

(30) Priorität: 24.06.87 DE 3720805

(43) Veröffentlichungstag der Anmeldung:
28.12.88 Patentblatt 88/52

(45) Bekanntmachung des Hinweises auf die
Patenterteilung:
16.10.91 Patentblatt 91/42

(84) Benannte Vertragsstaaten:
AT CH FR GB LI SE

(56) Entgegenhaltungen:
EP-A- 0 125 529
EP-A- 0 213 399
US-A- 2 654 407

WERKSTATT UND BETRIEB, Band 119, Nr. 9,
September 1986, Seiten 797-801, Carl Hanser
Verlag, München, DE; G. SCHEER:
"Automatische Werkzeug-Wechselsysteme
mit zentraler, radialer Spannkrafteinleitung"

(73) Patentinhaber: Fried. Krupp Gesellschaft mit
beschränkter Haftung
Altendorfer Strasse 103
W-4300 Essen 1(DE)

(72) Erfinder: Von Haas, Rainer, Dipl.-Ing.
Krümmelstrasse 26
W-2054 Geesthacht(DE)

(74) Vertreter: Vomberg, Friedhelm, Dipl.-Phys.
Schulstrasse 8
W-5650 Solingen 1(DE)

## Beschreibung

Die Erfindung betrifft eine Werkzeugwechseleinrichtung nach dem Oberbegriff des Anspruches 1.

Für Werkzeugmaschinen sind Werkzeugwechseleinrichtungen bekannt, bei denen ein Greifer das Werkzeug aus dem Werkzeuggrundhalter herausnimmt und ein neues einsetzt. Durch eine in die Werkzeugmaschine eingebaute Spanneinheit wird das Werkzeug aus- und eingespannt. Das Lösen und Spannen des Werkzeuges wird von Hand durchgeführt.

In der Patentanmeldung EP-A-01 25 529 wird eine Werkzeugwechselvorrichtung beschrieben, bei der die Spannschraube durch einen ortsfest an der Werkzeugmaschine angebrachten Automaten bedient wird: An der Werkzeugmaschine ist eine Werkzeughalteraufnahme mit zentrischer Bohrung vorgesehen, in die eine mit einem zylindrischen Abschnitt zum Angriff eines Wechselarms versehener Werkzeughalter eingesetzt werden kann. Der Werkzeughalter wird über eine Spanneinheit mit Spannschraube mit der Werkzeugaufnahme verbunden. Der zylindrische Abschnitt des Werkzeughalters hat eine radiale Gewindebohrung. Am freien Ende eines unabhängig von der Werkzeugmaschine operierenden Wechselarmes befindet sich ein motorisch antreibbarer Verbindungsbolzen, der ein in die Gewindebohrung des zylindrischen Abschnittes des Werkzeughalters passendes Außengewinde aufweist. Zum Auswechseln des Werkzeuges wird der Verbindungsbolzen des Wechselarmes automatisch in die radiale Gewindebohrung des Werkzeughalters eingeschraubt. Die Gewindebohrung und der Verbindungsbolzen werden durch prismaförmige Zentrierausnehmungen am äußeren Ende des Wechselkopfes positionsgenau miteinander verbunden. Durch einen ortsfest an der Werkzeugmaschine angebrachten motorisch angetriebenen Schraubendreher wird die Spannschraube in der Werkzeugaufnahme gelöst. Das Werkzeug wird durch den Wechselarm abgezogen und ein identischer Wechselkopf, der dem alten Wechselkopf diametral gegenüber an dem Wechselarm angeordnet ist, aufgesetzt. Anschließend wird die Spannschraube durch den Schraubendreher wieder angezogen.

Es ist ein Nachteil dieser Vorrichtung, daß das Auswechseln und Lösen bzw. Spannen des Werkzeuges mittels zweier getrennter Vorrichtungen durchgeführt wird. Für den ortsfest an der Maschine angebrachten Schraubendreher ist nicht bei allen Werkzeugmaschinen ausreichend Platz vorhanden. Ein weiterer Nachteil der beschriebenen Werkzeugwechselvorrichtung besteht darin, daß für rechte und linke Werkzeuganordnungen entsprechend geänderte Ausführungen dieser Vorrichtung erforderlich sind. Die Werkzeugwechseleinrichtung ist damit nicht universell verwendbar. Schließlich ist ein weiterer Nachteil des Systems, daß an dem Wechselarm höchstens zwei Plätze für Wechselköpfe vorgesehen sind. Bei Werkzeugmaschinen mit Werkzeugaufnahmen für mehrere Wechselköpfe werden dadurch die Werkzeugwechselzeiten erheblich verlängert.

Eine Werkzeugwechseleinrichtung nach dem Oberbegriff des Anspruchs 1 wird in der EP-A-0 213 399 beschrieben. Diese besitzt einen relativ zu einem quer zur Achse der Werkzeugaufnahme bewegbaren, drehbar gelagerten Halter für mehrere Greiferhände, sowie einen drehend antreibbaren Schrauber, der in Richtung auf die Werkzeugaufnahme absteht und beim Bewegen des Halters in die Ausrichtposition gegen eine an der Werkzeugaufnahme vorgesehene Halteschraube für das Werkzeug stößt und Kupplungsmittel zum Drehen der Halteschraube aufweist.

Der Erfindung liegt die Aufgabe zugrunde, eine Werkzeugwechselvorrichtung für eine Werkzeugmaschine zu schaffen, bei der Wechselkopf und Werkzeugaufnahme durch eine automatische Spanneinheit mit integrierter Spannschraube verbunden sind, die das automatische Lösen/Spannen und Auswechseln axial oder radial zur Maschinenachse angeordneter Werkzeuge mittels einer einzigen, von der Werkzeugmaschine unabhängigen Vorrichtung erlaubt, linke und rechte Werkzeuganordnungen gleichermaßen bedienen kann.

Diese Aufgabe wird durch die im Anspruch 1 aufgeführte Merkmalskombination gelöst.

Weiterbildungen der Erfindung sind in den abhängigen Ansprüchen 2 bis 10 aufgeführt.

Bei einer konkreten Ausführungsform befindet sich an einem mehrachsig bewegbaren Hubschlitten ein drehbar gelagerter Schwenkarm. Ein zugehöriger Antrieb ermöglicht eine getaktete Bewegung des Schwenkarmes in jeden beliebigen Winkel. An dem freien Ende des Schwenkarmes ist ein Greiferhalter mit mindestens vier Werkzeugplätzen angeordnet. In dem Schwenkarm ist außerdem eine Spannbitwelle integriert, die an beiden Enden mit einem Profil versehen ist, das Drehmomente übertragen kann. Diese Spannbitwelle kann axial so bewegt werden, daß sie sowohl links als auch rechts mit der Spannschraube eines Werkzeughalters gekuppelt werden kann.

Ein Ausführungsbeispiel des Erfindungsgegenstandes ist in Fig. 1 bis 4 dargelegt, und zwar zeigt:

Fig. 1a, b den Hubschlitten und den Schwenkarm der Werkzeugwechselvorrichtung mit Greiferhalter und Spannbitwelle in zwei verschiedenen Ansichten,

Fig. 2 einen senkrechten Schnitt durch die Ebene II-II in Fig. 1, und

Fig. 3 und 4    den Werkzeugwechsel in schematischer Form.

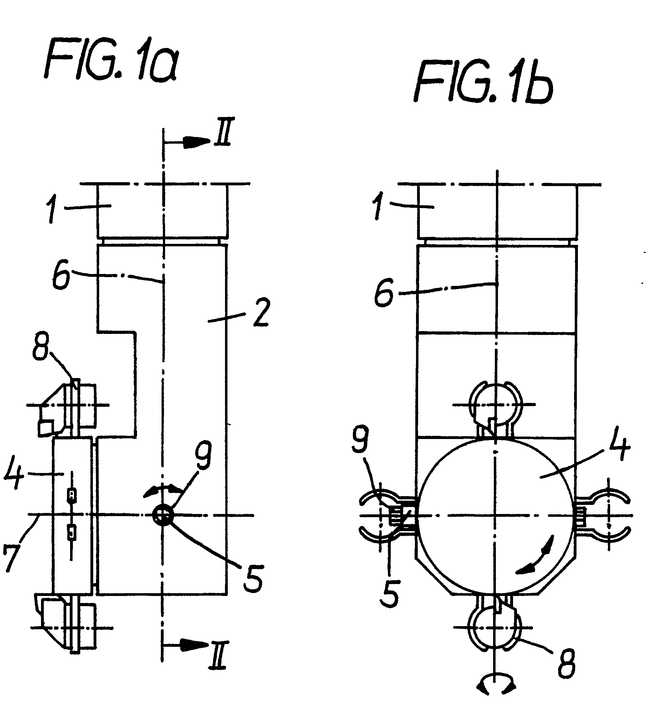

Die in Fig. 1 dargestellte Werkzeugwechseleinrichtung besteht aus einem Hubschlitten 1, an dem ein Schwenkarm 2 befestigt ist. Der Schwenkarm trägt einen Greiferhalter 4 und wird von der Spannbitwelle 5 durchdrungen.

Der unabhängig von der Werkzeugmaschine operierende Hubschlitten 1 kann zwei- oder dreiachsig bewegt werden. Der daran befestigte Schwenkarm 2 hat einen quadratischen Querschnitt und ist um die Achse 6 drehbar gelagert. Der Schwenkarm kann Drehbewegungen von 2 x 180°, vorzugsweise 4 x 90° oder in jedem anderen beliebigen Winkel ausführen. Der Antrieb für den Schwenkarm kann vorteilhaft im Hubschlitten integriert werden. Am unteren Ende des Schwenkarms ist auf einer der vier Seiten in vertikaler Richtung ein um die Achse 7 drehbarer Greiferhalter 4 angebracht. Der Greiferhalter ist mit mindestens vier Werkzeuggreifern 8 ausgerüstet. In der horizontalen Ebene senkrecht zur Achse 7 wird der Schwenkarm von einer motorisch angetriebenen, axial verschiebbaren Spannbitwelle 5 durchdrungen. Die Spannbitwelle hat an beiden Enden ein Profil 9, das Drehmomente übertragen kann.

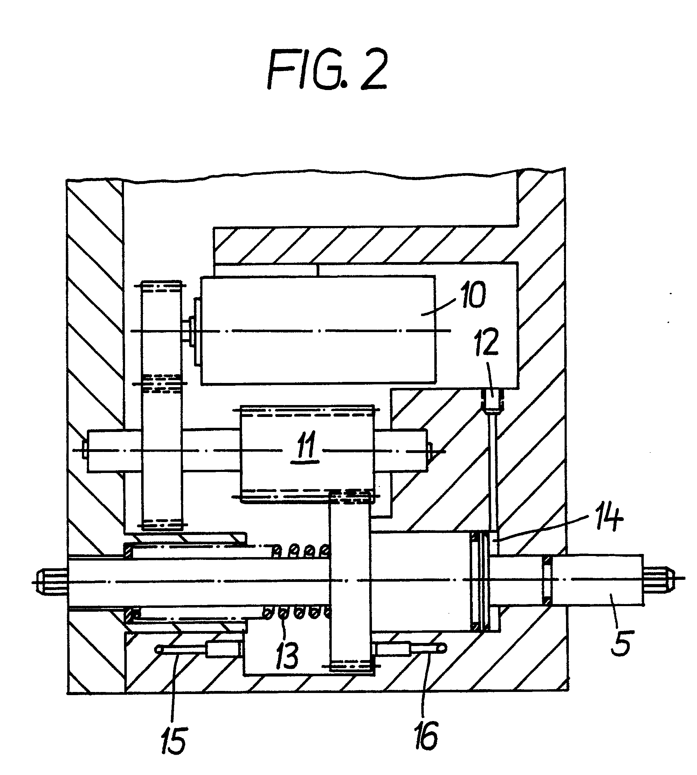

In Fig. 2 ist ein Querschnitt durch den unteren Teil des Schwenkarms 2 mit Spannbitwelle 5, dem zugehörigen Antrieb 10, 11 und der Vorrichtung für die Axialbewegung 12, 13 dargestellt.

Der Motor 10 treibt über eine Zwischenwelle 11 die Spannbitwelle 5 an. Der Motor ist vorzugsweise mit einem einstellbaren maximalen Drehmoment für Rechts- und Linkslauf ausgerüstet.

Die Vorrichtung für die Axialbewegungen besteht aus einem Druckluftanschluß 12 und einer Feder 13. Wird der Druckluftanschluß 12 mit Druckluft beaufschlagt, wird die Kammer 14 mit Luft gefüllt und die Spannbitwelle 5 nach links gegen die Kraft der Feder 13 aus dem Schwenkarm 2 herausgedrückt. Hört der Druckluftstrom auf, wird die Spannbitwelle 5 durch die Feder 13 in die gezeichnete Stellung zurückgeschoben. Durch die Endtaster 15 und 16 wird die jeweils gewünschte axiale Stellung der Spannbitwelle festgestellt.

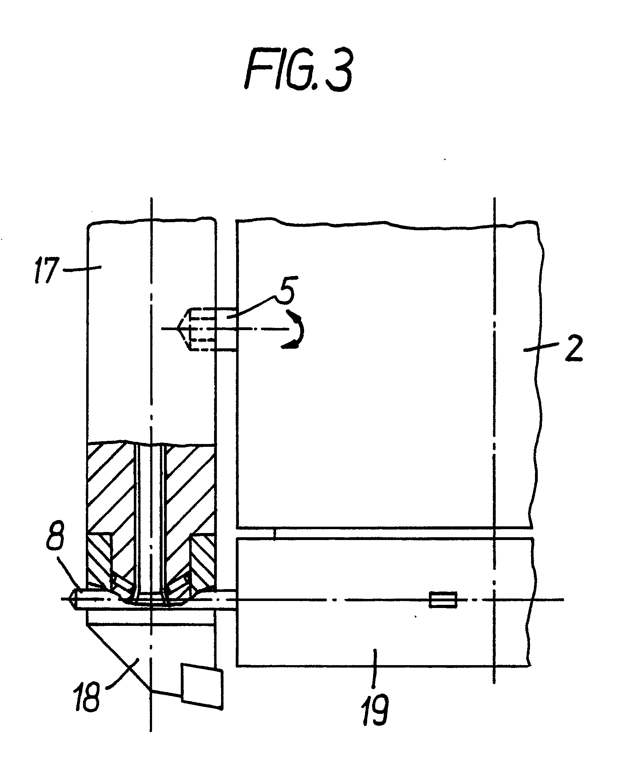

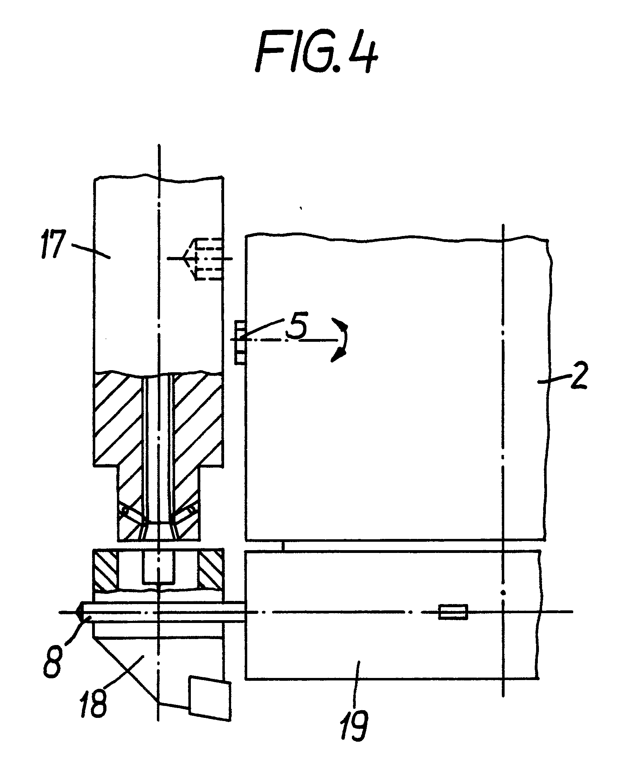

Der Werkzeugwechsel mit der erfindungsgemäßen Vorrichtung ist in Fig. 3 und 4 dargestellt.

Wie in Fig. 3 zu erkennen ist, fährt der Schwenkarm 2 so an die Werkzeugmaschine heran, daß der in dem Werkzeughalter 17 befindliche Werkzeugkopf 18 von dem Greifer 8 gefaßt werden kann. Der Werkzeugkopf ist gespannt. Die Spannbitwelle 5 wird bei langsamer Drehung axial eingekuppelt. Nach erfolgtem Kupplungsvorgang wird mit dem Entspannmoment die Werkzeughalterspannung gelöst.

Aus Fig. 4 ist zu erkennen, daß die Spannbitwelle 5 axial aus der Spannstellung ausgekuppelt und der Werkzeugkopf 18 durch axiales Verfahren des Werkzeughalters 17 oder der Greiferplatte 19 vom Werkzeughalter 17 getrennt wird. Der Greiferplatte wird danach gedreht und ein neues Werkzeug in umgekehrten Schritten aufgesetzt und verspannt.

Der besondere Vorteil der vorliegenden Erfindung besteht darin, daß bei Werkzeugwechseleinrichtungen, bei denen sich die Spannschraube der automatischen Spanneinheit in der Werkzeugaufnahme befindet, der Werkzeugwechsel durch einen Schwenkarm ausgeführt werden kann, in dem Greifer- und Spanneinheit integriert sind. Durch diese Vorrichtung kann der Werkzeugwechsel mit einer unabhängig von der Werkzeugmaschine operierenden Einheit vollautomatisch durchgeführt werden.

Es ist ein weiterer Vorteil der erfindungsgemäßen Vorrichtung, daß durch die drehbare Lagerung des Schwenkarms, die Schwenkbewegung in jeden beliebigen Winkel erlaubt, sowohl axial als auch radial zur Maschinenachse angeordnete Werkzeugplätze zu erreichen sind. In Verbindung mit der erfindungsgemäß ausgestalteten Spannbitwelle, die es insbesondere ermöglicht sowohl linke als auch rechte Werkzeughalterwechselsysteme zu betätigen, sind damit in der Praxis alle in einer Ebene winkelmäßig unterschiedlich angeordnete Werkzeughaltersysteme bedienbar.

## Patentansprüche

1. Werkzeugwechseleinrichtung zum Wechseln und Lösen/Spannen des Werkzeuges von Werkzeugsystemen, bei denen Werkzeugkopf und Werkzeughalter durch eine Spanneinheit mit in den Werkzeughalter integrierter Spannschraube verbunden sind, mit einem mehrachsig bewegbaren Hubschlitten (1), einem um eine Achse (7) drehbaren Greiferhalter (4) mit mindestens zwei Werkzeuggreifern (8) und einer axial verschiebbar und drehbar gelagerten Spannbitwelle (5) zum Lösen und Spannen des Werkzeuges,
**dadurch gekennzeichnet,**
daß der Greiferhalter von einem am Hubschlitten befestigten und um eine zur Drehachse (7) des Greiferhalters senkrechte Achse (6) drehbar gelagerten Schwenkarm (2) getragen wird, und
daß sich die im Schwenkarm (2) integrierte Spannbitwelle (5) so über die gesamte Breite des Schwenkarmes (2) erstreckt, daß sie auf beiden Seiten des Schwenkarmes (2) hervortritt und mit der Spannschraube eines gegriffenen Werkzeughalters gekuppelt werden kann, so daß rechte und linke Werkzeugsysteme in jeder beliebigen Position bedient werden können.

2. Werkzeugwechseleinrichtung nach Anspruch 1, dadurch gekennzeichnet, daß der Hubschlitten (1) dreiachsig bewegbar ist.

3. Werkzeugwechseleinrichtung nach einem der Ansprüche 1 oder 2, dadurch gekennzeichnet, daß der Schwenkarm (2) um 360° drehbar ist.

4. Werkzeugwechseleinrichtung nach einem der Ansprüche 1 bis 3, dadurch gekennzeichnet, daß die Drehung des Schwenkarmes (3) getaktet werden kann.

5. Werkzeugwechseleinrichtung nach einem der Ansprüche 1 bis 4, dadurch gekennzeichnet, daß an dem Schwenkarm (2) eine um eine Achse drehbare Greiferplatte (19) befestigt ist.

6. Werkzeugwechseleinrichtung nach Anspruch 5, dadurch gekennzeichnet, daß die Greiferplatte (19) um 360° drehbar ist.

7. Werkzeugwechseleinrichtung nach Anspruch 5 oder 6, dadurch gekennzeichnet, daß die Drehung der Greiferplatte (19) getaktet werden kann.

8. Werkzeugwechseleinrichtung nach einem der Ansprüche 1 bis 7, dadurch gekennzeichnet, daß die Spannbitwelle (5) an beiden Seiten mit einem kuppelbaren Profil versehen ist.

9. Werkzeugwechseleinrichtung nach einem der Ansprüche 1 bis 8, dadurch gekennzeichnet, daß die Spannbitwelle (5) motorisch angetrieben wird.

10. Werkzeugwechseleinrichtung nach einem der Ansprüche 1 bis 9, dadurch gekennzeichnet, daß der Antrieb der Spannbitwelle (5) mit Rechts- und Linkslauf versehen ist.

## Claims

1. A tool change device for the changing and loosening/clamping of the tool of tool systems, wherein the tool head and the tool holder are connected via a clamping unit having a tightening screw integrated in the tool holder, the device having: a lifting carriage (1) which can move in several axes; a gripper holder (4) which can rotate around an axis (7) and has at least two tool grippers (8); and an axially displaceably and rotatably mounted clamping bit shaft (5) for releasing and clamping the tool, characterized in that the gripper holder is borne by a pivoting arm (2) attached to the lifting carriage and mounted to rotate around an axis (6) perpendicular to the axis of rotation (7) of the gripper holder, and the clamping bit shaft (5) integrated in the pivoting arm (2) so extends over the total width of the pivoting arm (2) that said shaft emerges on both sides of the pivoting arm (2) and can be coupled to the tightening screw of a gripped tool holder, so that right-hand and left-hand tool systems can be serviced in any required position.

2. A tool change device according to claim 1, characterized in that the lifting carriage (1) can move in three axes.

3. A tool change device according to one of claims 1 or 2, characterized in that the pivoting arm (2) can rotate through 360°.

4. A tool change device according to one of claims 1 to 3, characterized in that the rotation of the pivoting arm (2) can be timed.

5. A tool change device according to one of claims 1 to 4, characterized in that a gripper plate (19) rotatable around an axis is attached to the pivoting arm (2).

6. A tool change device according to claim 5, characterized in that the gripper plate (19) can be rotated through 360°.

7. A tool change device according to claims 5 or 6, characterized in that the rotation of the gripper plate (19) can be timed.

8. A tool change device according to one of claims 1 to 7, characterized in that the clamping bit shaft (5) has a couplable section on both sides.

9. A tool change device according to one of claims 1 to 8, characterized in that the clamping bit shaft (5) is motor-driven.

10. A tool change device according to one of claims 1 to 9, characterized in that the drive of the clamping bit shaft (5) runs clockwise and anticlockwise.

## Revendications

1. Dispositif de changement d'outils pour remplacer et mettre en serrage ou desserrer l'outil de systèmes d'outillage, pour lesquels la tête d'outil et le porte-outil sont reliés par une unité de serrage comportant une vis de serrage intégrée dans le porte-outil, dispositif qui comporte un chariot de relevage (1) pouvant se déplacer suivant plusieurs axes, un support à griffes (4) tournant autour d'un axe (7) et comportant au moins deux griffes d'outil (8) et un arbre de serrage à embouts (5) monté tournant et pouvant se déplacer axialement, pour desserrer et mettre en serrage l'outil,

caractérisé en ce que,

le support à griffes est porté par un bras pivotant (2), fixé sur le chariot de relevage (1) et monté tournant autour d'un axe (6) perpendiculaire à l'axe de rotation (7) du support à griffes,

et en ce que l'arbre de serrage à embouts (5), intégré dans le bras pivotant (2), s'étend sur toute la largeur du bras pivotant (2), de telle façon qu'il ressort des deux côtés du bras pivotant (2) et peut être accouplé avec la vis de serrage d'un porte-outil à griffes de façon à desservir, dans toutes les positions désirées, des systèmes d'outils à droite et à gauche.

2. Dispositif de changement d'outils suivant la revendication 1, caractérisé en ce que le chariot de relevage (1) est mobile suivant trois axes.

3. Dispositif de changement d'outils suivant la revendication 1 ou la revendication 2, caractérisé en ce que le bras pivotant (2) peut tourner sur 360°.

4. Dispositif de changement d'outils suivant l'une quelconque des revendications 1 à 3, caractérisé en ce que la rotation du bras pivotant (2) peut être cadencée.

5. Dispositif de changement d'outils suivant l'une quelconque des revendications 1 à 4, caractérisé en ce qu'un plateau à griffes (19) tournant autour d'un axe est fixé sur le bras pivotant (2).

6. Dispositif de changement d'outils suivant la revendication 5, caractérisé en ce que le plateau à griffes (19) peut tourner sur 360°.

7. Dispositif de changement d'outils suivant la revendication 5 ou la revendication 6, caractérisé en ce que la rotation du plateau à griffes (19) peut être cadencée.

8. Dispositif de changement d'outils suivant l'une quelconque des revendications 1 à 7, caractérisé en ce que l'arbre de serrage à embouts (5) est muni à ses deux extrémités d'un profil permettant un accouplement.

9. Dispositif de changement d'outils suivant l'une quelconque des revendications 1 à 8, caractérisé en ce que l'arbre de serrage à embouts (5) est motorisé.

10. Dispositif de changement d'outils suivant l'une quelconque des revendications 1 à 9, caractérisé en ce que l'entraînement de l'arbre de serrage à embouts (5) est équipé pour rotation à droite ou à gauche.

# FIG.1a

# FIG.1b

# FIG. 2

# FIG.3

# FIG.4